# EUROPÄISCHE PATENTSCHRIFT

(11) **EP 3 792 387 B1**
(45) Veröffentlichungstag und Bekanntmachung des Hinweises auf die Patenterteilung: **27.10.2021**
(21) Anmeldenummer: 19196487.3
(22) Anmeldetag: 10.09.2019
(51) Int. Cl.: D06F 39/00, D06F 33/72, F28D 21/00, F28F 13/12, F28F 27/00, D06F 58/20, D06F 58/24, D06F 103/32, D06F 105/32, D06F 33/46, F28D 7/02

(54) **KONDENSATOR/WÄRMETAUSCHER, WASCHVORRICHTUNG UND VERFAHREN ZUR NUTZUNG VON ABWÄRME**
CONDENSER/HEAT EXCHANGER, WASHING APPARATUS AND METHOD FOR USING WASTE HEAT
CONDENSEUR/ÉCHANGEUR DE CHALEUR, APPAREIL DE LAVAGE ET MÉTHODE D'UTILISATION DE LA CHALEUR PERDUE

(43) Veröffentlichungstag der Anmeldung: 17.03.2021
(73) Patentinhaber: Guggenberger, Johannes, 88489 Wain (DE)
(72) Erfinder: Guggenberger, Johannes, 88489 Wain (DE)
(74) Vertreter: Patentanwälte Olbricht, Buchold, Keulertz Partnerschaft mbB

(56) Entgegenhaltungen:
- EP-A1- 0 600 451
- EP-A1- 3 309 293
- EP-A1- 3 401 436
- EP-A2- 2 466 002
- US-A- 4 832 114

## Beschreibung

Die Erfindung betrifft einen Kondensator/Wärmetauscher zum Anschluss an den Abluftauslass einer Waschvorrichtung umfassend ein Gehäuse mit einem Einlass und einem Auslass für die Abluft der Waschvorrichtung, zumindest ein Leitungselement mit einem Zulauf und einem Ablauf für zu erwärmendes Brauchwasser, zumindest ein Rührelement mit einem Antrieb und zumindest einem Schaufelelement, wobei das Schaufelelement dazu vorgesehen ist, die Abluft aus der Waschvorrichtung im Gehäuse zu bewegen, wobei das Leitungselement spiralförmig um zumindest einen Teil des Rührelementes herum angeordnet ist und das Gehäuse das Rührelement und das Leitungselement umschließt. Die Erfindung betrifft weiterhin eine Waschvorrichtung mit einem Kondensator/Wärmetauscher sowie ein Verfahren zur Nutzung von Abwärme beim Betrieb einer Waschvorrichtung.

Waschvorrichtungen oder Waschmaschinen, die gewerblich eingesetzt werden, weisen oftmals große Waschräume auf. Gegen Ende eines Waschvorganges wird meist mit hohen Klarspültemperaturen klargespült, um eine Desinfektion des Waschgutes sowie ein schnelles Trocknen sicherzustellen. Üblicherweise wird nach einem Waschgang das Waschgut auch zumindest teilweise in der Waschvorrichtung getrocknet. Bei dieser Trocknung in einem geschlossenen Waschraum entsteht eine größere Menge an erwärmter, kondensathaltiger Abluft, die aus der Waschvorrichtung abgeführt werden muss. Bei einer Ableitung dieser Abluft in die Umgebung schlägt sich das Kondensat, meist Wasserdampf oder Wasserschwaden, in der Umgebung nieder, wobei Feuchtigkeitsschäden auftreten können. Aus dem Stand der Technik sind zur Lösung dieses Problems bereits verschiedene Arten von Kondensatoren bekannt, die Flüssigkeit aus der schwadenhaltigen Abluft abscheiden und anschließend die getrocknete Abluft der Umgebung zuführen.

Ebenfalls ist aus dem Stand der Technik bekannt, dass die bei der Kondensation der schwadenhaltigen Abluft freiwerdende Wärme durch einen Wärmetauscher einem anderen Prozess zugeführt und diese Wärme weiter genutzt wird. Problematisch in der Praxis erweist sich jedoch die Tatsache, dass die Abluft aus einer Waschvorrichtung meist weder einen konstanten Feuchtigkeitsgehalt/Kondensatgehalt noch eine konstante Temperatur aufweist. Meist ist der Feuchtigkeitsgehalt und die Temperatur der Abluft direkt nach dem Beginn des Trocknungsvorgangs in der Waschvorrichtung sehr hoch. Je länger Abluft aus der Waschvorrichtung entfernt/abgesaugt wird, desto geringer wird der Feuchtigkeitsgehalt und die Temperatur der Abluft. Herkömmliche Kondensatoren/Wärmetauscher sind an sich zeitlich verändernde Parameter der Abluft kaum anpassbar. Je nach Eigenschaften der Abluft funktioniert entweder die Kondensation oder der Wärmetausch der bekannten Technik nur unzureichend.

EP 0 600 451 A1 offenbart einen Wärmetauscher, der ein von einem ersten Medium durchströmtes Rohr auf, in dem eine von einem zweiten Medium durchströmte Rohrschlange koaxial angeordnet ist, wobei sich längs der Rohrachse eine Antriebswelle durch das gesamte Rohr erstreckt, die mit veränderbarer Drehzahl und ggf. umkehrbarer Drehrichtung antreibbar ist. Die Antriebswelle trägt ein sich über die gesamte Länge der Rohrschlange erstreckendes Rotorblatt von kleinerem Durchmesser als der Innendurchmesser der Rohrschlange, um eine axiale Förderung des ersten Mediums an der Rohrschlange vorbei durchzuführen.

Es ist somit die Aufgabe der Erfindung, Lösungen vorzuschlagen, wie die Nutzung von Abwärme bei Waschvorrichtungen unter gleichzeitiger Trocknung der Abluft verbessert werden kann. Weiterhin ist es Aufgabe der Erfindung, Wärme aus einem vorhergehenden Waschvorgang zu speichern und in einem zeitlich danach erfolgenden Waschgang erneut zu nutzen.

Diese Aufgabe der Erfindung wird gelöst durch einen Kondensator/Wärmetauscher zum Anschluss an den Abluftauslass einer Waschvorrichtung umfassend
- ein Gehäuse mit einem Einlass und einem Auslass für die Abluft der Waschvorrichtung,
- zumindest ein Leitungselement mit einem Zulauf und einem Ablauf für zu erwärmendes Brauchwasser,
- zumindest ein Rührelement mit einem Antrieb und zumindest einem Schaufelelement,
wobei das Schaufelelement dazu vorgesehen ist, die Abluft aus der Waschvorrichtung im Gehäuse zu bewegen, wobei das Leitungselement spiralförmig um zumindest einen Teil des Rührelementes herum angeordnet ist und das Gehäuse das Rührelement und das Leitungselement umschließt, wobei der Ein-lass und der Auslass durch Durchbrüche im Gehäuse gebildet werden, welche innerhalb des spiralförmig ausgeführten Leitungselementes münden und das Rührelement, insbesondere das Schaufelelement, so ausgeführt ist, dass die durch den Einlass eintretende Abluft bei Betätigung des Rührelementes durch das Leitungselement hindurch oder am Leitungselement vorbei zum umschließenden Gehäuse hin verdrängbar ist.

Unter Kondensator/Wärmetauscher ist dabei eine Vorrichtung zu verstehen, welche sowohl als Kondensator als auch als Wärmetauscher dient oder verwendet werden kann. Der erfindungsgemäße Kondensator/Wärmetauscher ist geeignet zum Anschluss an den Abluftanschluss einer Waschvorrichtung. Ein erfindungsgemäßer Kondensator/Wärmetauscher kann jedoch selbstverständlich auch an andere Geräte oder Vorrichtungen angeschlossen werden, aus denen erwärmte und kondensathaltige Abluft abgeführt werden muss und gleichzeitig Wärme rückgewonnen werden soll. Ein erfindungsgemäßer Kondensator/Wärmetauscher umfasst zunächst ein Gehäuse. Dieses Gehäuse weist einen Einlass zur Zuführung der Abluft der Waschvorrichtung auf. Durch einen Auslass wird die Abluft aus der Waschvorrichtung wieder aus dem Gehäuse des erfindungsgemäßen Kondensator/Wärmetauschers abgeführt. Einlass und Auslass können dabei mit Anschlüssen für Rohrleitungen oder Ähnlichem versehen sein. Weiterhin umfasst der Kondensator/Wärmetauscher zumindest ein Leitungselement mit einem Zulauf und einem Ablauf für zu erwärmendes Brauchwasser oder generell für zu erwärmende Waschflüssigkeit. Das Leitungselement ist das Bauteil des Kondensator/Wärmetauschers, bei dem Wärme aus der Abluft der Waschvorrichtung auf zu erwärmendes Brauchwasser übertragen und gespeichert wird. Der Wärmetausch findet somit am Leitungs-element statt. Das Leitungselement kann von zu erwärmendem Brauchwasser durchströmt werden. Üblicherweise wird auf einer Seite des Leitungselementes, nämlich am Zulauf, kaltes Brauchwasser zugeführt und am Ablauf, am gegenüberliegenden Ende des Leitungselementes, erwärmtes Brauchwasser abgeführt. Weiterhin umfasst ein erfindungsgemäßer Kondensator/Wärmetauscher zumindest ein Rührelement, welches dazu vorgesehen ist die über den Einlass zugeführte Abluft im Gehäuse zu bewegen und zu verteilen. Das Rührelement umfasst dafür zumindest einen Antrieb und zumindest ein Schaufelelement. Der Antrieb bewegt das Rührelement, welches wiederum die Abluft im Gehäuse in Bewegung versetzt oder zumindest in Bewegung versetzen kann. Erfindungsgemäß ist das Leitungselement spiralförmig um zumindest einen Teil des Rührelementes herum geführt. Das Rührelement befindet sich somit zumindest teilweise innerhalb des Leitungselementes. Durch die spiralförmige Ausführung des Leitungselementes bestehen Abstände zwischen den einzelnen Windungen der Spirale, welche ein Durchströmen des Leitungselementes ermöglichen. Das Gehäuse umschließt das Leitungselement von außen, wobei zwischen Leitungselement und Innenwand des Gehäuses ein Abstand vorgesehen ist. Die Zuführung der Abluft aus der Waschvorrichtung erfolgt über den Einlass, welcher als Durchbruch im Gehäuse oder der Gehäusewand ausgeführt ist. Der Einlass mündet im Gehäuse innerhalb des spiralförmig ausgeführten Leitungselementes. Abluft, welche über den Einlass in das Gehäuse eingeführt wird, durchströmt somit das Innere des spiralförmig ausgeführten Leitungselementes parallel zu dessen Längsachse. Dabei kommt die Abluft nur in geringem Maße in Kontakt mit den Spiralen des Leitungselementes. Das Rührelement ist nun so ausgeführt, dass bei Betätigung des Antriebs die in der Mitte durch das Leitungselement strömende Abluft nach außen verdrängt wird. Auf diesem Weg nach außen wird die Abluft auf das Leitungselement gerichtet und strömt in den Abständen zwischen den Windungen des Leitungselementes hindurch bis zum Gehäuse. An der Gehäuseinnenwand wird die bewegte Abluft dann abgelenkt oder reflektiert und strömt erneut zurück auf das Leitungselement oder durch das Leitungselement hindurch. Durch diese Anordnung von Rührelement, Leitungselement und Gehäuse wird bei aktiviertem Rührelement eine sehr gute Umströmung des Leitungselementes erreicht. Durch diese Umströmung, bei der die Abluft mehrfach am Leitungselement vorbeigeführt wird, findet ein sehr guter Wärmeübergang von der Abluft auf das Leitungselement und dadurch auf das im Leitungselement befindliche Brauchwasser statt. Bei aktiviertem, bewegtem Rührelement kann kondensatsreiche, warme Abluft effektiv einem Wärmeaustausch und gleichzeitig einer Kondensation durch Berührung mit dem Leitungselement zugeführt werden. Besonders vorteilhaft an einem erfindungsgemäßen Kondensator/Wärmetauscher ist, dass die Umströmung des Leitungselementes durch die Abluft durch die Aktivierung des Rührelementes jedoch auch nahezu komplett unterbrochen oder unterbunden werden kann. Bei deaktiviertem Rührelement durchströmt die Abluft das Gehäuse und das Innere des spiralförmigen Leitungselementes, ohne signifikant mit den Windungen des Leitungselementes in Berührung zu kommen. Dieser Betriebszustand mit deaktiviertem Rührelement ist besonders vorteilhaft, wenn die Abluft aus der Waschvorrichtung bereits eine niedrigere Temperatur und einen niedrigeren Kondensatgehalt aufweist. Bei der Vorbeileitung von Abluft mit niedriger Temperatur am Leitungselement kann es vorkommen, dass das im Leitungselementes enthaltene Brauchwasser statt erwärmt zu werden, abgekühlt wird. Eine solche Abkühlung macht die Funktion als Wärmetauscher zunichte und ist somit zu vermeiden. Durch ein Abschalten des Rührelementes kann somit ein Abkühlen des Brauchwassers verhindert werden. Abluft wird somit nur am Leitungselement vorbeigeführt, wenn diese wärmer ist als der Inhalt des Leitungselementes. Vorteilhafter Weise kann der Antrieb des Rührelementes stufenlos geregelt werden. Bei sehr heißer, kondensathaltiger Abluft wird das Rührelement mit hoher Drehzahl betätigt, wodurch eine starke Verwirbelung im Gehäuse und damit wird eine wirkungsvolle Umströmung des Leitungselementes erreicht. Bei sinkender Temperatur und/oder sinkendem Kondensatgehalt der Abluft wird die Drehzahl des Rührelementes reduziert und damit auch die Umströmung des Leitungselementes durch die Abluft reduziert. Ist die Temperatur der Abluft schließlich niedriger als die Temperatur des Brauchwassers im Leitungselement, wird das Rührelement komplett deaktiviert und die kühle und trockene Abluft direkt vom Einlass zum Auslass im Gehäuse geleitet. Ein erfindungsgemäßer Kondensator/Wärmetauscher ist einfach aufgebaut und kann durch eine Regelung der Drehgeschwindigkeit des Rührelementes stufenlos und einfach an verschiedene Temperaturen und Kondensatgehalte der Abluft angepasst werden. Somit ist stets zum Einen eine sichere Entfernung von Kondensat aus der Abluft und zum Anderen eine optimierte Nutzung von Abwärme aus der Abluft gegeben.

Des Weiteren ist in dem Vorschlag vorteilhafter Weise vorgesehen, dass das Leitungselement durch ein Rohr gebildet wird, welches spiralförmig ausgeführt ist, wobei zwischen den einzelnen Windungen des spiralförmig ausgeführten Rohres Abstände bestehen, durch welche die vom Rührelement verdrängte Abluft strömen kann. In dieser Ausführungsform wird das Leitungselement durch ein durchgehendes, spiralförmig geformtes Rohr gebildet. Die Spiralform entsteht dadurch, dass das Rohr mit einer Steigung in mehreren Windungen gebogen wird. Die Biegung erfolgt dabei um eine (gedachte) Mittelachse der Spirale. Senkrecht auf diese Mittelachse betrachtet, kann die Spirale dabei einen kreisrunden Querschnitt aufweisen. Dieser senkrecht auf die Mittelachse betrachtete Querschnitt kann jedoch auch eine andere Form, beispielsweise eine rechteckige oder quadratische Form aufweisen. Üblicherweise weist der Querschnitt aber zumindest gerundete Ecken auf, um einen widerstandsarmen Durchfluss von Brauchwasser durch das Leitungselement zu ermöglichen. Das spiralförmig gestaltete Rohr ist dabei so geformt, dass zwischen den einzelnen Windungen jeweils Abstände bestehen. Diese Abstände sind dazu vorgesehen, dass im Kondensator/Wärmetauscher Abluft zwischen den einzelnen Windungen des Leitungselementes hindurchströmen kann. Dieses Hindurchströmen wird für einen guten Wärmeübergang benötigt. Günstiger Weise wird das Leitungselement durch ein Rohr mit großem Durchmesser gebildet. Dadurch weist das Leitungselement eine große Oberfläche auf, die vorteilhaft für die Wärmeübertragung ist. In der Praxis hat sich herausgestellt, dass zusätzliche Oberflächenvergrößerungen, wie beispielsweise durch Rippen, schnell verschmutzen, wodurch sich der Wirkungsgrad ungewünscht verschlechtert. Durch ein glattes Rohr mit großer Oberfläche wird eine Verschmutzung, wie sie beispielsweise bei Rippen auftritt, umgangen.

Bei einer bevorzugten Ausgestaltung des Vorschlags ist vorgesehen, dass die Mittelachse des spiralförmig ausgeführten Leitungselementes im Betrieb des Kondensator/Wärmetauschers im Wesentlichen vertikal verläuft. Die Mittelachse des Leitungselementes ist üblicherweise im Betrieb vertikal orientiert. Die Abluft aus der Waschvorrichtung durchströmt dabei das Innere des spiralförmig ausgeführten Leitungselementes in vertikaler Richtung, üblicherweise von oben nach unten. Eine Verdrängung der Abluft durch das Rührelement erfolgt im Wesentlichen im rechten Winkel zur Mittelachse, also in horizontaler Richtung.

Des Weiteren ist vorgesehen, dass die Rotationsachse des Rührelementes im Betrieb des Kondensator/Wärmetauschers im Wesentlichen vertikal verläuft. Auch die Rotationsachse des Rührelementes ist im Betrieb vertikal ausgerichtet. Bei Betätigung dreht sich das Rührelement somit um eine vertikale Achse und verdrängt dabei Abluft senkrecht dazu, also in horizontaler Richtung.

In einer vorteilhaften Ausgestaltung ist vorgesehen, dass der Zulauf an dem im Betrieb nach unten orientierten Ende des Leitungselementes und der Ablauf an dem im Betrieb nach oben orientierten Ende des Leitungselementes angeordnet ist. In dieser Ausführungsform wird das Leitungselement von einem unten angeordneten Zulauf in Richtung eines oben angeordneten Ablaufes durchströmt. Somit wird kaltes Brauchwasser unten in das Leitungselement eingeführt und oben durch den Wärmetausch erwärmtes Brauchwasser aus dem Leitungselement entnommen. Selbstverständlich kann die Durchströmungsrichtung auch umgekehrt werden, so dass eine durch Strömung durch das Leitungselement im Betrieb von oben nach unten erfolgt. Der Kondensator/Wärmetauscher wird bevorzugt im Gegenstromprinzip betrieben: die Abluft aus der Waschvorrichtung durchströmt das Gehäuse von oben nach unten, das zu erwärmende Brauchwasser durchströmt das Leitungselement von unten nach oben. Selbstverständlich kann ein erfindungsgemäßer Kondensator/Wärmetauscher aber auch im Gleichstromprinzip betrieben werden, bei dem die Abluft und das Brauchwasser in die gleiche Richtung, nämlich nach unten oder nach oben strömen.

Geschickter Weise ist vorgesehen, dass der Einlass an dem im Betrieb nach oben orientierten Ende des Gehäuses und der Auslass an einem im Betrieb nach unten orientierten Ende des Gehäuses angeordnet ist. In dieser Ausführungsform durchströmt die Abluft das Innere des Gehäuses und des spiralförmigen Leitungselementes von einem oben angeordneten Einlass zu einem unten angeordneten Auslass. Selbstverständlich kann die Strömungsrichtung auch umgekehrt werden oder in eine andere Raumrichtung, beispielsweise horizontal ausgerichtet sein.

In einer weiteren bevorzugten Ausführungsform ist vorgesehen, dass das Gehäuse, das Leitungselement und das Rührelement in einer Draufsicht auf den Kondensator/Wärmetauscher konzentrisch zueinander angeordnet sind. In dieser Ausführungsform sind die Mittel- oder Symmetrieachsen von Leitungselement, Rührelement und Gehäuse deckungsgleich ausgerichtet. Dadurch ergibt sich im Gehäuse bei Betrieb des Rührelementes eine geordnete, symmetrische Strömung der Abluft durch die Abstände des Leitungselementes. Eine solche geordnete Strömung ist besonders vorteilhaft für einen guten Wirkungsgrad bei der Kondensation und beim Wärmetausch. Die Mittel- oder Symmetrieachsen müssen dabei nicht zwingend deckungsgleich verlaufen, auch eine parallele Anordnung dieser Achsen ist günstig für eine regelmäßige Strömung und einen guten Wirkungsgrad.

Des Weiteren ist günstiger Weise vorgesehen, dass das Leitungselement in einer Draufsicht von oben auf den Kondensator/Wärmetauscher rechteckig, insbesondere quadratisch, und die Innenwand des Gehäuses kreisrund oder oval ausgeführt ist oder das Leitungselement in einer Draufsicht von oben auf den Kondensator/Wärmetauscher kreisrund oder oval und die Innenwand des Gehäuses rechteckig ausgeführt ist. Für einen guten Wirkungsgrad des Kondensator/Wärmetauschers ist es erforderlich, dass im Betrieb das Leitungselement von der Abluft mehrmals umströmt wird. Diese mehrfache Umströmung kann durch die geo-metrische Ausgestaltung von Leitungselement und Gehäuse erreicht werden. So kann das Leitungselement in einer Draufsicht von oben, rechtwinklig zur Mittelachse des spiralförmigen Leitungselementes rechteckig ausgeführt sein. Diese rechteckige Form wird dann mit einer runden oder ovalen Form der Innenwand des Gehäuses kombiniert. Die Abluft durchströmt zunächst das rechteckig geformte Leitungselement von innen nach außen und trifft dort auf die gewölbte Innenwand des Gehäuses. Von der gewölbten Innenwand des Gehäuses aus wird die Abluft dann abgelenkt oder reflektiert und strömt erneut durch das Leitungselement. Eine ähnliche Wirkung kann dadurch erzielt werden, dass das Leitungselement eine runde oder ovale Form aufweist, die Innenwand des Gehäuses in einer Draufsicht dagegen eine rechteckige Form. Auch durch diese Formgebung wird ein mehrfaches Ablenken der Abluft in horizontaler Richtung und Durchströmen des Leitungselementes erreicht. Die abweichende Form von Leitungselement und Innenwand des Gehäuses sorgt für unregelmäßige Abstände zwischen den beiden Elementen, wodurch zusätzlich Turbulenzen und Verwirbelungen in der Abluft entstehen. Solche Turbulenzen fördern wiederum ein mehrfaches Umströmen des Leitungselementes durch die Abluft.

Vorteilhafter Weise ist vorgesehen, dass das Leitungselement durch ein Rohr gebildet wird, welches spiral-förmig ausgeführt ist und welches einen kreisrunden Querschnitt aufweist. Besonders einfach und stabil aufgebaut ist ein Leitungselement, welches aus einem spiralförmig gebogenen Rohr mit kreisrundem Quer-schnitt besteht. Rohre mit kreisrundem Querschnitt sind in vielen Größen verfügbar und können einfach gebogen werden. Selbstverständlich kann ein solches Rohr auch einen rechteckigen oder einen vieleckigen Querschnitt aufweisen.

Des Weiteren ist in dem Vorschlag vorteilhafter Weise vorgesehen, dass an der im Betrieb nach unten gewandten Seite des Gehäuses ein Kondensatablauf angeordnet ist, welcher dazu vorgesehen ist, die im Kondensator/Wärmetauscher kondensierte Flüssigkeit aus dem Gehäuse abzuleiten. In dieser Ausführungsform wird das Kondensat aus dem Kondensator/Wärmetauscher durch einen Kondensatablauf abgeführt. Das Kondensat wird üblicherweise durch niedergeschlagenes Wasser gebildet. Im Betrieb des Kondensator/Wärmetauschers kondensiert, zumindest in einem Teil der Betriebszustände, Flüssigkeit aus der Abluft am Leitungselement und an der Innenwand des Gehäuses. Diese kondensierte Flüssigkeit läuft auf-grund der Schwerkraft nach unten. Dort wird die kondensierte Flüssigkeit von dem Kondensatsablauf aufgefangen und aus dem Gehäuse ausgeleitet. Der Kondensatsablauf kann beispielsweise als Blechrinne ausgeführt sein, die am unteren Rand der Innenwand des Gehäuses angeordnet ist und sich auch unter dem Leitungselement erstreckt. Die Ableitung des Kondensats kann durch eine Öffnung oder einen Rohranschluss in dieser Blechrinne gebildet werden.

Bei einer bevorzugten Ausgestaltung des Vorschlags ist vorgesehen, dass an dem im Betrieb nach unten gewandten Ende der Innenwand des Gehäuses eine Kondensatsammelvorrichtung angeordnet ist, welche dazu vorgesehen ist, an der Innenwand des Gehäuses und/oder am Leitungselement kondensierte Flüssigkeit zu sammeln und dem Kondensatablauf zuzuführen. Die Kondensatsammelvorrichtung dient zusätzlich oder in Verbindung mit dem Kondensatablauf der Abführung von kondensierter Flüssigkeit aus dem Kondensator/Wärmetauscher. Die Kondensatsammelvorrichtung ist so ausgeführt, dass das Kondensat, welches sich an der Gehäuseinnenwand bildet und das Kondensat, welches an der äußeren Oberfläche des Leitungselementes entsteht, aufgefangen und gesammelt wird. Günstiger Weise ist die Kondensatsammelvorrichtung in der Form einer Schale oder Rinne ausgeführt, welche von oben nach unten herab-laufendes oder herabtropfendes Kondensat auffängt und dem zuvor beschriebenen Kondensatablauf zuführt. Die Kondensatsammelvorrichtung weist einen Durchbruch auf, durch den die Abluft in Richtung des Auslasses im Gehäuse strömen kann.

Des Weiteren ist vorgesehen, dass die Rotationsachse des Rührelementes parallel zur Mittelachse des spiralförmig ausgeführten Leitungselementes angeordnet ist. In dieser Ausführungsform ist das Rührelement innerhalb des spiralförmig ausgeführten Leitungselementes angeordnet, wobei die Rotationsachse des Rührelementes zumindest parallel zur Mittelachse des Leitungselementes angeordnet ist. Dadurch wird erreicht, dass die durch das Rührelement erzeugte Strömung der Abluft senkrecht zur Mittelachse des Leitungselementes verläuft.

In einer vorteilhaften Ausgestaltung ist vorgesehen, dass das Rührelement in Umfangsrichtung um dessen Rotationsachse herum mehrere, insbesondere verschieden geformte Schaufelelemente aufweist. Für die Funktion der Verdrängung und Verwirbelung der Abluft im Leitungselement ist bereits ein einziges Schaufelelement ausreichend, welches an der Rotationsachse des Rührelementes angeordnet ist. Ein einziges Schaufelelement an der Rotationsachse bewegt sich asymmetrisch und erzeugt somit eine turbulente Strömung, welche besonders vorteilhaft für die Umströmung des Leitungselementes mit Abluft ist. Um in gleicher Zeit bzw. bei gleicher Drehzahl des Rührelementes ein größeres Volumen an Abluft bewegen zu können, können um dessen Rotationsachse herum auch mehrere Schaufelelemente angeordnet werden. Dabei können diese Schaufelelemente alle die gleiche Geometrie aufweisen. Zur Erhöhung der Turbulenz der Strömung können auch mehrere Schaufelelemente mit unterschiedlicher Geometrie vorgesehen werden. Die Schaufelelemente können dabei in gleichen oder konstanten Winkeln zueinander um die Rotationsachse verteilt angeordnet sein. Denkbar sind jedoch auch mehrere Schaufelelemente, die in unterschiedlichen Winkeln zueinander um die Rotationsachse angeordnet sind.

Geschickter Weise ist vorgesehen, dass das Rührelement in axialer Richtung entlang seiner Rotationsachse mehrere Schaufelelemente aufweist. In dieser Ausführungsform sind in axialer Richtung mehrere Schaufelelemente entlang der Rotationsachse des Rührelementes angeordnet. In dieser Ausführungsform können durch unterschiedliche Schaufelelemente an unterschiedlichen axialen Positionen unterschiedliche Strömungen der Abluft erzeugt werden. So kann beispielsweise erreicht werden, dass in einem Bereich, in dem ein Schaufelelemente mit einer größeren Verdrängungsfläche angeordnet ist, eine stärkere Strömung erzeugt wird als in einem anderen axialen Bereich, in dem ein Schaufelelemente mit einer geringeren Verdrängungsfläche angeordnet ist. Es ist selbstverständlich auch möglich, gleichzeitig mehrere Schaufelelemente in axialer Richtung und mehrere Schaufelelemente in Umfangsrichtung um die Rotationsachse herum anzuordnen.

In einer weiteren bevorzugten Ausführungsform ist vorgesehen, dass das Rührelement eine Rotationsachse aufweist, an der das zumindest eine Schaufelelement befestigt ist und zusätzlich das Rührelement eine Hilfsachse aufweist, an der ein Wirbelelement befestigt ist, wobei die Rotationsachse und die Hilfsachse gleichzeitig oder unabhängig voneinander rotiert werden können. In dieser Ausführungsform umfasst das Rührelement zusätzlich eine Hilfsachse, an der zumindest ein Wirbelelement befestigt ist. Dieses Wirbelelement kann unabhängig von dem zumindest einen Schaufelelement durch Rotation der Hilfsachse bewegt werden. Durch dieses Wirbelelement können andere Strömungsverhältnisse der Abluft im Kondensator/Wärmetauscher erzeugt werden als durch das Schaufelelement. So kann beispielsweise das Wirbelelement eine geringere Verdrängungsfläche aufweisen als das Schaufelelement. Wird in den Kondensator/Wärmetauscher warme, kondensatreiche Abluft eingebracht, wird das Schaufelelement betätigt und es findet eine starke Verdrängung und Strömung der Abluft um das Leitungselement herum statt. Wird zu einem anderen Zeitpunkt Abluft mit niedrigerer Temperatur und/oder niedrigerem Kondensatgehalt eingeführt, so wird das Schaufelelement angehalten und lediglich das Wirbelelement betrieben. Dadurch wird die Strömung im Gehäuse reduziert und das Leitungselement weniger stark umströmt. Dieser Betriebszustand ist sinnvoll, indem die Abluft nicht oder kaum wärmer als der Inhalt des Leitungselementes ist. Bei starker Umströmung des Leitungselementes in diesem Betriebszustand würde die Abluft den Inhalt des Leitungselementes, insbesondere das darin befindliche Brauchwasser abkühlen anstatt zu erwärmen. Die reduzierte Umströmung verhindert diese Abkühlung und verbessert somit den Wirkungsgrad des Kondensator/Wärmetauschers. Neben einer veränderten Verdrängungsfläche, wie sie durch den Einsatz eines kleineren Wirbelelementes anstelle eines größeren Schaufelelementes erreicht werden kann, kann eine reduzierte Umströmung des Leitungselementes selbstverständlich auch durch eine Reduzierung der Drehgeschwindigkeit von Schaufel- oder Wirbelelement erreicht werden. Es bestehen somit mehrere Möglichkeiten die Strömungsgeschwindigkeit, die Turbulenz und die verdrängte Menge der Abluft zu variieren und somit den Kondensator/Wärmetauscher an die Eigenschaften der aktuell eingeführten Abluft anpassen.

Des Weiteren ist günstiger Weise vorgesehen, dass die Rotationsachse des Rührelementes zwischen Ein-lass und Auslass des Gehäuses verläuft. Günstiger Weise ist die Rotationsachse des Rührelementes innerhalb des Leitungselementes und zwischen Einlass und Auslass angeordnet. Einlass und Auslass sind als Durchbrüche im Gehäuse ausgeführt. Die Rotationsachse erstreckt sich durch Einlass und Auslass. Somit ist die Rotationsachse parallel zu der Strömungsrichtung ausgerichtet, die sich bei einer durch Strömung von Abluft vom Einlass zum Auslass ergibt. Diese Anordnung ist besonders vorteilhaft, da bei einer Rotation des Rührelementes die Abluft senkrecht zur Rotationsachse und damit senkrecht zur Strömung der Abluft vom Einlass zum Auslass abgelenkt wird.

Eine Steuerung ist vorgesehen, die den Betrieb des Rührelementes regelt, wobei zumindest ein Temperatureintrittssensor vorgesehen ist, der die Temperatur der am Einlass eintretenden Abluft bestimmt und wobei zumindest ein Leitungstemperatursensor vorgesehen ist, der die Temperatur im Inneren des Leitungselementes bestimmt, die Signale dieser Temperatursensoren der Steuerung zugeführt werden und die Steuerung aus diesen Signalen die Regelung des Rührelementes bestimmt. In dieser Ausführungsform ist zur Regelung des Betriebs des Kondensator/Wärmetauschers eine Steuerung vorgesehen, welche über Sensoren den Zustand der zugeführten Abluft bestimmt/feststellt und über Aktoren den Betrieb des Kondensator/Wärmetauschers steuert. Die Steuerung ist dabei zumindest mit einem Temperatureintrittssensor verbunden, welcher die Temperatur der durch den Einlass eingeführten Abluft ermittelt. Weiterhin ist zumindest ein Leitungstemperatursensor vorgesehen, der die Temperatur des Inhaltes des Leitungselementes, insbesondere die Temperatur des darin befindlichen Brauchwassers bestimmt. Die Regelung des Rührelementes wird von der Steuerung basierend auf den Signalen dieser Sensoren vorgenommen. Ist die vom Temperatureintrittssensor ermittelte Eintrittstemperatur der Abluft höher als die Temperatur des Inhaltes des Leitungselementes, welche von dem Leitungstemperatursensor bestimmt wird, so wird das Rührelement betätigt. Die eintretende Abluft wird dann durch das Rührelement verdrängt und strömt am Leitungselement vorbei. Dabei erfolgt ein Wärmeübergang und eine Kondensation des in der Abluft enthaltenen Kondensats. Ist die gemessene Eintrittstemperatur gleich oder niedriger als die Temperatur des Inhaltes des Leitungselementes deaktiviert die Steuerung den Antrieb des Rührelementes. Dadurch wird die Abluft vom Rührelement nicht mehr in horizontale Richtung verdrängt und strömt nicht oder kaum noch am Leitungselement vorbei. Dadurch wird verhindert, dass die Abluft das Leitungselement und dessen Inhalt abkühlt. Die Steuerung kann selbstverständlich auch Zwischenzustände abbilden und die Drehzahl oder Drehgeschwindigkeit des Rührelementes basierend auf dem Verhältnis der Temperaturen am Einlass und dem Inneren des Leitungselementes regeln. Selbstverständlich können auch mehrere Temperatursensoren vorgesehen sein. In einer besonders günstigen Ausführungsform ist der Leitungstemperatursensor in der Mitte der Durchflusslänge des Leitungselementes angeordnet.

Des Weiteren ist in dem Vorschlag vorteilhafter Weise vorgesehen, dass der Leitungstemperatursensor am Leitungselement in der Mitte zwischen Zu- und Ablauf angeordnet ist. Eine solche Anordnung ergibt einen Mittelwert der Temperatur des Inhaltes des Leitungselementes. Zur feineren Regelung der Steuerung und des Rührelementes können auch mehrere Leitungstemperatursensoren an verschiedenen Stellen am Leitungselement angeordnet werden.

Die Aufgabe der Erfindung wird weiterhin gelöst durch Waschvorrichtung zur Reinigung von Waschgut, umfassend
- eine Waschkabine, in welcher das Waschgut gereinigt wird, wobei die Waschkabine eine Abluftöffnung aufweist,
- zumindest einen Boiler, der dazu vorgesehen ist Waschflüssigkeit, insbesondere Klarspülflüssigkeit, vorzuwärmen, wobei der Boiler über eine Verbindungsleitung mit der Waschkabine verbunden ist,
- zumindest eine Abluftabführung, welche mit der Abluftöffnung der Waschkabine verbunden ist,
- zumindest einen Kondensator/Wärmetauscher nach einem der vorhergehenden Ansprüche, wobei die Abluftabführung mit dem Einlass des Kondensator/Wärmetauschers verbunden ist, wodurch Abluft aus der Waschkabine dem Kondensator/Wärmetauscher zuführbar ist und wobei der Zulauf des Kondensator/Wärmetauschers mit einem Kalt- oder Frischwasserzulauf verbunden ist und der Ablauf des Kondensator/Wärmetauschers mit einem Zulauf des Boilers verbunden ist, wodurch Wärme aus der Abluft aus der Waschkabine durch den Kondensator/Wärmetauscher zur Vorwärmung von dem Boiler zugeführten Waschwasser einsetzbar ist.

Eine erfindungsgemäße Waschvorrichtung basiert auf Waschvorrichtungen aus dem Stand der Technik und weist zumindest eine Waschkabine auf, in der in einer abgeschlossenen Umgebung Waschgut gereinigt werden kann. In dieser Waschkabine wird das Waschgut zunächst gewaschen und anschließend getrocknet. Bei diesem Trocknungsvorgang entsteht heiße, kondensathaltige Abluft. Zur Trocknung des Waschgutes muss diese Abluft aus der Waschkabine abgeführt werden, wozu die Waschkabine eine Abluftöffnung aufweist. Die Waschvorrichtung weist weiterhin einen Boiler auf, der zur Erwärmung des benötigten Waschwassers oder der benötigten Waschflüssigkeit vorgesehen ist. Der Boiler der Waschvorrichtung wird insbesondere zur Erwärmung des Wassers für den Klarspülgang am Ende eines Waschvorganges genutzt. Selbstverständlich kann in dem Boiler jedoch auch Waschflüssigkeit für andere Waschgänge, wie beispielsweise einen Vorwaschgang oder den Hauptwaschgang erwärmt werden. Im Boiler wird die Flüssigkeit erwärmt und über eine Verbindungsleitung der Waschkabine zugeführt. Weiterhin umfasst die Waschvorrichtung eine Abluftabführung, welche dazu vorgesehen ist Abluft aus der Waschkabine abzusaugen und aus der Waschvorrichtung heraus zu transportieren. Die Abluftabführung einer erfindungsgemäßen Waschvorrichtung ist mit einem Kondensator/Wärmetauscher nach einer der zuvor beschriebenen Ausführungsformen verbunden. Dieser Kondensator/Wärmetauscher ist dazu vorgesehen, zum einen zumindest einen großen Teil des Kondensat aus der Abluft zu entfernen und zum anderen die in der Abluft enthaltene Wärme für weitere Prozesse in der Waschvorrichtung rückzugewinnen und zu nutzen. Erfindungsgemäß ist der Zulauf des Leitungselementes des Kondensator/Wärmetauscher mit einem Wasserzulauf, insbesondere einem Kalt- oder Frischwasserzulauf, von außerhalb der Waschvorrichtung verbunden. Über den Zulauf wird kaltes Brauchwasser in das Leitungselement eingeführt. Im Kondensator/Wärmetauscher wird dann aus der Abluft aus der Waschkabine rückgewonnene Wärme zur Erwärmung dieses Brauchwassers verwendet. Der Ablauf des Leitungselementes einer erfindungsgemäßen Waschvorrichtung ist mit einem Zulauf des Boilers verbunden. Über diesen Zulauf wird im Kondensator/Wärmetauscher vorgewärmtes Brauchwasser dem Boiler zugeführt. Durch diese Vorwärmung des Brauchwassers benötigt der Boiler weniger Energie, um das Brauchwasser auf die benötigte Waschtemperatur aufzuheizen. Durch den erfindungsgemäßen Kondensator/Wärmetauscher einer erfindungsgemäßen Waschvorrichtung wird Kondensat aus der Abluft besonders wirkungsvoll entfernt und gleichzeitig darin enthaltene Wärme rückgewonnen und für weitere Waschprozesse verwendet. Der Kondensator/Wärmetauscher ist an verschiedene Betriebszustände in einfacher Weise anpassbar, was zu einem sehr hohen Wirkungsgrad sowohl bei der Kondensation als auch bei der Rückgewinnung von Wärme führt. Weiterhin dient der Kondensator mit seinem Leitungs-element in der Waschvorrichtung als Wärmespeicher. Das als spiralförmiges Rohr ausgeführte Leitungs-element hat ein hohes Fassungsvermögen, üblicherweise in einem Bereich von 10-200 I. Im Betrieb der Waschvorrichtung wird der Inhalt des Leitungselementes von der vorbeiströmenden Abluft erwärmt. Der dadurch erwärmte Inhalt verbleibt zunächst im Leitungselement, wodurch dort die rückgewonnene Wärme zwischengespeichert wird. Der Inhalt des Leitungselementes, üblicherweise Brauchwasser, wird anschließend für den nächsten Waschvorgang dem Boiler und weiterhin der Waschkabine zugeführt. Eine erfindungsgemäße Waschvorrichtung gewinnt somit Wärme aus der Abluft eines ersten Waschvorganges zurück, speichert diese im Kondensator/Wärmetauscher und verwendet diese Wärme zur Vorwärmung von Brauchwasser eines zweiten oder einem anderen, zeitlich nach dem ersten Waschvorgang erfolgenden Waschvorgang. Diese Zwischenspeicherung von Wärme im Kondensator/Wärmetauscher ist besonders vorteilhaft, da dadurch kein zusätzlicher, durch eine weitere Baugruppe gebildeter Wärmespeicher erforderlich ist.

Des Weiteren ist vorgesehen, dass die Abluftabführung zumindest einen Ventilator umfasst, der Abluft aus der Waschkabine absaugt und dem Kondensator/Wärmetauscher zuführt. In dieser Ausführungsform ist in oder an der Abluftabführung ein Ventilator vorgesehen, der einen Unterdruck erzeugt und somit kondensathaltige Abluft aus der Waschkabine absaugt. Der Ventilator transportiert die abgesaugte Abluft weiter zum Kondensator/Wärmetauscher. Alternativ zu einem Ventilator können auch andere Vorrichtungen vorgesehen werden, die Luft ansaugen und weiter transportieren können. Beispielsweise kann anstelle des Ventilators auch eine Kolbenpumpe oder Ähnliches vorgesehen werden.

Die Aufgabe der Erfindung wird weiterhin gelöst durch ein Verfahren zur Nutzung von Abwärme beim Betrieb einer Waschvorrichtung, insbesondere durch einen Kondensator/Wärmetauscher nach einer der zuvor beschriebenen Ausführungsformen, umfassend die Schritte
- Absaugen von kondensathaltiger Abluft aus einer Waschvorrichtung,
- Vorbeileitung der Abluft an einem Leitungselement, wobei Wärme aus der Abluft auf den Inhalt des Leitungselementes übergeht und sich Kondensat aus der Abluft an dem Leitungselement niederschlägt, wobei die Abluft durch ein Rührelement zum Leitungselement bewegt wird und diese durch das Rührelement erzeugte Bewegung zumindest teilweise rechtwinklig zur Anströmrichtung der Abluft aus der Waschvorrichtung gerichtet ist,
- Ableitung des am Leitungselement niedergeschlagenen Kondensats,
- Ableitung der abgekühlten, getrockneten Abluft,
- Ableitung des erwärmten Inhalts des Leitungselementes zur Verwendung in der Waschvorrichtung.

Das erfindungsgemäße Verfahren dient dazu, Abwärme aus der Abluft einer Waschvorrichtung zur Erwärmung oder Vorwärmung von Waschflüssigkeit oder Brauchwasser für den Betrieb der Waschvorrichtung zu nutzen. Am Ende eines Waschvorganges in einer Waschvorrichtung erfolgt ein Trocknungsprozess, bei dem kondensatreiche, warme Abluft entsteht. Diese Abluft wird aus der Waschvorrichtung abgeleitet und einem erfindungsgemäßen Kondensator/Wärmetauscher zugeführt. Bei dieser Zuführung der Abluft strömt diese zunächst parallel zur Mittelachse des spiralförmigen Leitungselementes und/oder parallel zur Rotationsachse des Rührelementes durch das Gehäuse des Kondensator/Wärmetauschers. Bei nicht betätigtem Rührelement erfolgt diese zu den Achsen parallele Strömung vom Einlass zum Auslass des Gehäuses. Bei dieser zu den Achsen parallel gerichteten Strömung kommt die Abluft nicht oder kaum in Kontakt mit dem Leitungselement. Wird jedoch das Rührelement des Kondensator/Wärmetauschers betätigt, so erfolgt eine Ablenkung der Abluft aus ihrer Anströmrichtung, welche parallel zu der Rotationsachse des Rührelementes und der Mittelachse des Leitungselementes ist. Die Ablenkung erfolgt zumindest teilweise rechtwinklig zu dieser Anströmrichtung. Erst durch diese Ablenkung rechtwinklig zur Anströmrichtung wird das Leitungs-element von der Abluft signifikant umströmt. Bei dieser Umströmung des Leitungselementes wird Wärme von der Abluft auf das Leitungselement und dessen Inhalt übertragen. Gleichzeitig schlägt sich Kondensat aus der Abluft am Leitungselement und auch an der Innenwand des Gehäuses nieder. Dieses niedergeschlagene Kondensat wird anschließend aus dem Kondensator/Wärmetauscher abgeführt, beispielsweise über den zuvor beschriebenen Kondensatablauf. Schließlich wird die abgekühlte und getrocknete Abluft aus dem Kondensator/Wärmetauscher abgeführt, üblicherweise über den Auslass des Gehäuses. Durch die Umströmung mit Abluft wurde zuvor das Leitungselement und damit auch dessen Inhalt, insbesondere Brauchwasser oder vorzuwärmende Waschflüssigkeit erwärmt. Die in der Abluft enthaltene Wärme ist somit auf den Inhalt des Leitungselementes übergegangen, welches nun im erwärmten Zustand der Waschvorrichtung zugeführt wird. Besonders vorteilhaft an dem erfindungsgemäßen Verfahren ist, dass die Umströmung oder das Vorbeileiten von Abluft am Leitungselement in einfacher Weise durch den Betriebs-zustand des Rührelementes beeinflusst werden kann. Durch eine entsprechende Regelung, wie zuvor anhand der Vorrichtung unter Zuhilfenahme der Steuerung beschrieben, kann das erfindungsgemäße Verfahren stets so gestaltet werden, dass ein optimaler Wirkungsgrad vorliegt.

Bei einer bevorzugten Ausgestaltung ist vorgesehen, dass die Temperatur der abgesaugten Abluft und die Temperatur des Inhaltes das Leitungselementes bestimmt wird und die Bewegung der Abluft durch das Rührelement und damit die Vorbeileitung der Abluft am Leitungselement solange vorgenommen wird, wie die Temperatur der Abluft höher ist als die Temperatur des Inhaltes des Leitungselementes und sobald die Temperatur der Abluft niedriger als die Temperatur des Inhaltes des Leitungselementes ist, die Bewegung der Abluft durch das Rührelement beendet wird, so dass die Abluft im Wesentlichen parallel zu ihrer Anströmrichtung fließt und nicht am Leitungselement vorbeigeleitet wird. Um einen optimalen Wirkungsgrad zu erreichen, wird bei dem Verfahren die Temperatur der in den Kondensator/Wärmetauscher eingeleiteten Abluft sowie die Temperatur des Inhaltes des Leitungselementes bestimmt. Basierend auf diesen ermittelten Temperaturen wird geregelt, ob und wie das Rührelement betätigt wird. Ist die Temperatur der Abluft höher als die Temperatur des Inhaltes des Leitungselementes, so wird das Rührelement betätigt und das Leitungselement von der Abluft umströmt, wobei Wärme von der Abluft auf den Inhalt des Leitungselementes übergeht. Ist die Temperatur der Abluft jedoch niedriger als die Temperatur des Inhaltes des Leitungs-elementes würde bei einer Umströmung des Leitungselementes eine ungewollte Abkühlung von dessen Inhalt erfolgen. Die Umströmung des Leitungselementes wird somit dadurch verhindert, dass das Rührelement nicht betätigt wird und die kühle Abluft, ohne in Kontakt mit dem Leitungselement zu treten, den Kondensator/Wärmetauscher über den Auslass wieder verlässt. Selbstverständlich sind auch Zwischenstufen dieser beiden Betriebszustände möglich, in denen das Rührelement mit unterschiedlicher Geschwindigkeit oder Drehzahl betätigt wird. Die Umströmung des Leitungselementes kann somit stufenlos durch eine Regelung des Rührelementes beeinflusst werden.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

Des Weiteren umfasst die Erfindung auch die Verwendung eines Kondensator/Wärmetauscher für den Zweck der Entfernung von Kondensat aus der Abluft einer industriell genutzten Waschvorrichtung. Ein Kondensator/Wärmetauscher kann in einfacher Weise an große Volumina anfallender Abluft aus einer Industriewaschvorrichtung angepasst werden. Darüber hinaus ist ein Kondensator/Wärmetauscher nach einer der zuvor beschriebenen Ausführungsformen sehr robust und zuverlässig aufgebaut, wodurch dieser gut geeignet für einen industriellen Einsatz ist. Bei der Verwendung eines Kondensator/Wärmetauschers in Verbindung mit einer industriell genutzten Waschvorrichtung können gleichzeitig große Mengen an Wärmeenergie rückgewonnen und für andere Prozesse wiederverwendet werden.

In der Zeichnung ist die Erfindung insbesondere in einem Ausführungsbeispiel schematisch dargestellt. Es zeigen:
Fig. 1 eine schematische, geschnittene Seitenansicht einer Ausführungsform eines erfindungsgemäßen Kondensator/Wärmetauschers,
Fig. 2 eine schematische, geschnittene Draufsicht einer Ausführungsform eines erfindungsgemäßen Kondensator/Wärmetauschers,
Fig. 3 eine schematische, geschnittene Draufsicht einer alternativen Ausführungsform eines erfindungsgemäßen Kondensator/Wärmetauschers,
Fig. 4 eine schematische, geschnittene Seitenansicht einer Ausführungsform einer erfindungsgemäßen Waschvorrichtung.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

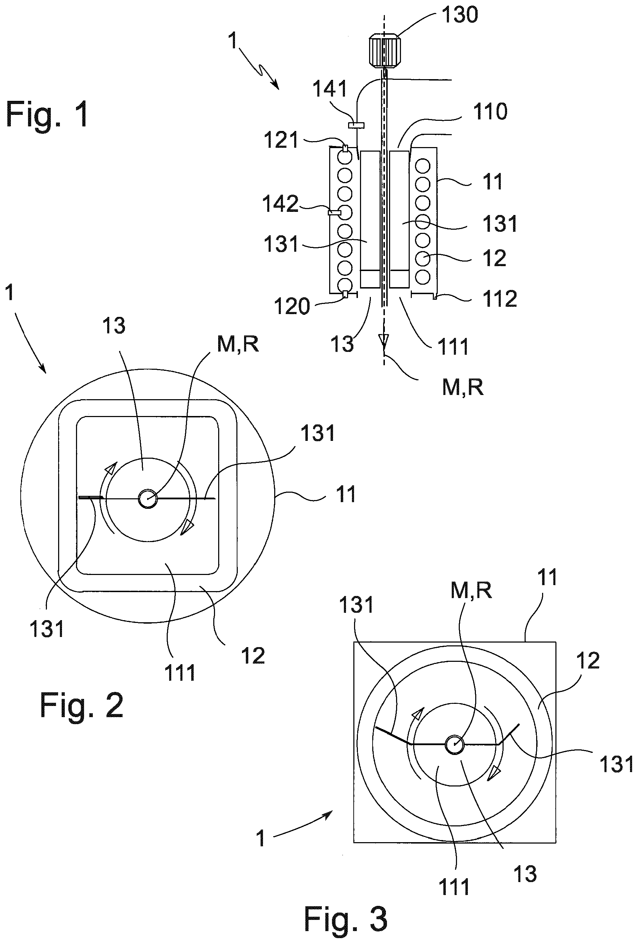

Fig. 1 zeigt eine schematische, geschnittene Seitenansicht einer Ausführungsform eines erfindungsgemäßen Kondensator/Wärmetauschers 1. Der Kondensator/Wärmetauscher 1 ist in der Darstellung auf der Ebene der Rotationsachse R des Rührelementes 13 geschnitten dargestellt. Die Darstellung ist schematisch und vereinfacht. Der Kondensator/Wärmetauscher 1 wird von dem Gehäuse 11 umgeben. Das Gehäuse 11 umschließt die anderen Elemente oder Bauteile des Kondensator/Wärmetauschers 1. An dem nach oben gewandten Ende des Gehäuses 11 ist ein Durchbruch vorgesehen, welcher den Ein-lass 110 bildet. Über den Einlass 110 kann Abluft, beispielsweise aus einer Waschvorrichtung, in das Gehäuse 11 eingebracht werden. Am nach unten gewandten Ende des Gehäuses 11 ist ein weiterer Durchbruch vorgesehen, welcher den Auslass 111 bildet, über den die Abluft wieder aus dem Gehäuse 11 herausgeleitet werden kann. Im Inneren des Gehäuses 11 ist ein spiralförmig ausgeführtes Leitungs-element 12 angeordnet. Dieses Leitungselement 12 wird durch ein gebogenes Rohr gebildet. Das Leitungselement 12 beginnt an dem links unten angeordneten Zulauf 120 und endet an dem links oben angeordneten Ablauf 121. Die Spiralform des Leitungselementes 12 entsteht dadurch, dass das Rohr um eine Mittelachse M gebogen ist, wobei zwischen jeder Windung ein Abstand vorliegt. Jede der Windungen weist auch eine Steigung auf. Im dargestellten Fall sind die Abstände zwischen den Windungen konstant. Die Steigung ist über das gesamte Leitungselement ebenfalls konstant. Alternativ ist es möglich, veränderliche Abstände zwischen den einzelnen Windungen vorzusehen oder die Steigung der Windungen zu variieren. Durch eine Veränderung der Abstände oder der Steigung kann die Strömung des Leitungselementes 12 durch die Abluft verändert werden. Im dargestellten Fall weist das gebogene Rohr, welches das Leitungselement 12 bildet, einen kreisrunden Querschnitt auf. Das Leitungselement 12 ist mit flüssigem oder gasförmigen Medium befüllbar. Üblicherweise wird das Leitungselement 12 mit zu erwärmenden Brauchwasser befüllt, welches über den Zulauf 120 in das Leitungselement eingebracht wird und am Ablauf 121 wieder aus dem Leitungselement 12 entnommen wird. Zur Regelung des Durchflusses von Medium durch das Leitungselement 12 können am Zulauf 120 und am Ablauf 121 Ventile vorgesehen werden. Im dargestellten Fall wird Medium, insbesondere Brauchwasser unten am Zulauf 120 in das Leitungselement 12 eingebracht und fließt von unten nach oben durch das Leitungselement 12. Im Inneren des spiralförmigen Leitungselementes 12 ist das Rührelement 13 angeordnet. Hier ist die Mittelachse M des Leitungselementes 12 deckungsgleich mit der Rotationsachse R des Rührelementes 13. Das Rührelement 13 umfasst eine in der Rotationsachse R angeordnete Welle, an der hier zwei Schaufelelemente 131 befestigt sind. Die Schaufelelemente 131 sind in der Darstellung symmetrisch zur Rotationsachse R angeordnet und erstrecken sich in der Darstellung rechts bzw. links von der Rotationsachse R. Alternativ kann auch nur ein einziges Schaufelelement 131 oder eine größere Anzahl als zwei Schaufelelemente 131 zum Rührelement 13 gehören. Das Rührelement 13 umfasst weiterhin einen Antrieb 130, welcher die Welle und damit die Schaufelelemente 131 in eine Drehbewegung versetzen kann. Günstigerweise wird der Antrieb 130 von einer hier nicht dargestellten Steuerung in seiner Geschwindigkeit bzw. Drehzahl geregelt. Bei Betätigung des Antriebs 130 drehen sich die Schaufelelemente 131 um die Rotationsachse R und verdrängen im Gehäuse 11 befindliche Abluft relativ von der Rotationsachse R nach außen. Durch diese Verdrängung strömt die Abluft nach außen und umströmt dabei die Windungen des Leitungselementes 12. Die Abluft strömt dabei insbesondere durch die Abstände zwischen den einzelnen Windungen des Leitungselementes 12.

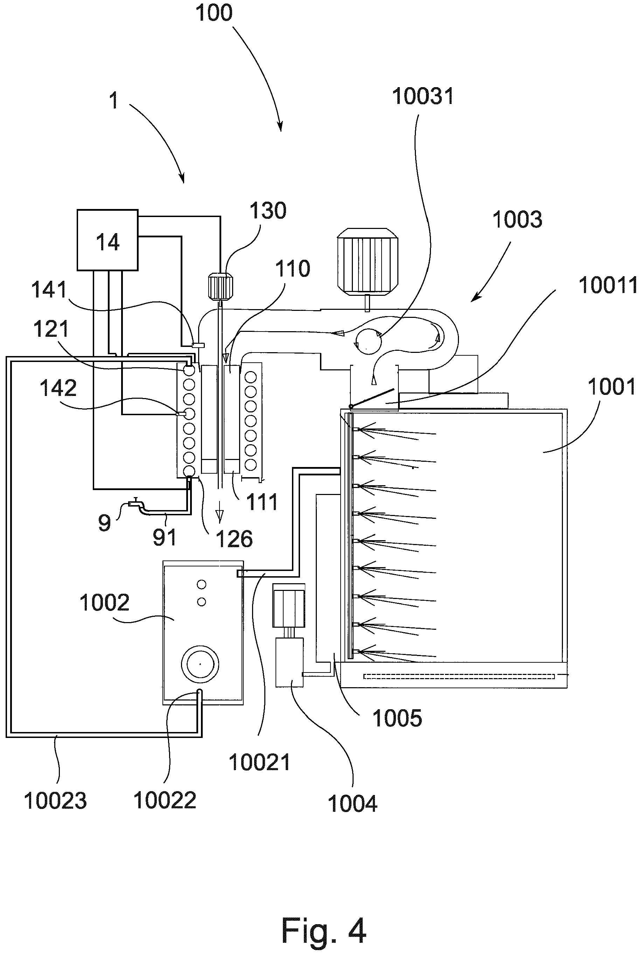

Die Abluft, welche im Kondensator/Wärmetauscher 1 von Kondensat befreit und abgekühlt werden soll, wird durch den Einlass 110 in das Gehäuse eingeführt und strömt in der Darstellung von oben nach unten durch das Gehäuse 11, bis die Abluft am Auslass 111 austritt. Bei aktiviertem Rührelement 13 wird die Abluft aus ihrer ursprünglichen vertikal von oben nach unten gerichteten Strömungsrichtung jedoch in horizontaler Richtung nach außen abgelenkt. Erst durch diese vom Rührelement 13 erzeugten horizontal ausgerichtete Strömungsrichtung gerät die Abluft in Kontakt mit dem Leitungselement 12. Bei deaktiviertem Rührelement 13 strömt die Abluft, zumindest zum größten Teil, vorbei am Leitungselement 12. Durch die Betätigung und die Drehgeschwindigkeit des Rührelementes 13 kann die Anströmung des Leitungs-elementes 12 durch die Abluft direkt und einfach beeinflusst werden. Weist die Abluft einen hohen Kondensatsgehalt und eine hohe Temperatur auf, so wird das Rührelement 13 betätigt und mit hoher Drehzahl betrieben. Dadurch entsteht im Gehäuse eine starke, turbulente in horizontale Richtung gerichtete Strömung und das Leitungselement 12 wird durch die Abluft umströmt. Durch diese Strömung schlägt sich das Kondensat an dem eine niedrigere Temperatur aufweisenden Leitungselement 12 nieder und Wärme geht von der Abluft auf das Leitungselement 12 und damit auf das im Leitungselement 12 befindliche Medium über. Durch die horizontal nach außen gerichtete Strömung schlägt sich auch Kondensat an der Innenwand des Gehäuses 11 nieder. Das niedergeschlagenen Kondensat läuft oder tropft durch die Schwerkraft im Inneren des Gehäuses nach unten, wird am unteren Ende des Gehäuses 11 durch eine Kondensatssammelvorrichtung aufgefangen und dem Kondensatablauf 112 zugeführt. Die kondensierte Flüssigkeit wird schließlich über den Kondensatablauf 112 aus dem Kondensator/Wärmetauscher 1 abgeleitet. Weist die über den Einlass 110 zugeführte Abluft eine niedrigere Temperatur und/oder einen niedrigeren Kondensatsgehalt auf, so soll die Umströmung des Leitungselementes 12 reduziert oder verhindert werden. In diesem Fall wird das Rührelement 13 mit niedrigerer Drehzahl betrieben oder ganz abgeschaltet. Im abgeschalteten Zustand des Rührelementes 13 durchströmt die Abluft das Gehäuse zum allergrößten Teil von oben nach unten in vertikaler Richtung und gerät kaum in Kontakt mit dem Leitungselement 12. Auf diese Weise wird der Inhalt des Leitungselementes 12 nicht abgekühlt. Durch eine entsprechende Regelung der Drehgeschwindigkeit des Rührelementes 12 kann somit der Wärmeübergang zwischen Abluft und dem Inhalt des Leitungselementes 12 in einfacher Weise eingestellt werden. Dadurch kann ein erfindungsgemäßer Kondensator/Wärmetauscher 1 stets mit optimalem Wirkungsgrad betrieben werden. Die optimale Drehgeschwindigkeit des Rührelementes 13 hängt somit von der Temperatur der eintretenden Abluft sowie von der Temperatur des sich im Leitungselement 12 befindlichen Mediums ab. Zur Ermittlung dieser Temperaturen sind am oder kurz vor dem Einlass 110 ein Temperatureintrittssensor 141 und ein Leitungstemperatursensor 142 vorgesehen. Der Temperatureintrittssensor 141 ermittelt die Temperatur der eintretenden Abluft, der Leitungstemperatursensor 142 die Temperatur des Mediums im Leitungselement 12. Der Leitungstemperatursensor 142 ist im dargestellten Fall in der Mitte des das Leitungselement 12 bildenden Rohres zwischen Zulauf 120 und Ablauf 121 angeordnet. Der Leitungstemperatursensor 142 ermittelt somit eine mittlere Temperatur des Inhaltes des Leitungselementes 12. Selbstverständlich können sowohl zur Messung der Temperatur des Inhaltes des Leitungselementes 12 als auch zur Ermittlung der Temperatur der eintretenden Abluft mehrere Sensoren vorgesehen werden. Darüber hinaus können Sensoren zur Ermittlung des Kondensatsgehaltes der eintretenden Abluft vorgesehen werden. Die Signale der beschriebenen Sensoren werden einer in Fig. 1 nicht dargestellten Steuerung zugeleitet, welche basierend auf den Sensorsignalen den Antrieb 130 des Rührelementes 13 regelt. Die Steuerung ist in Fig. 4 dargestellt und in Zusammenhang mit einer erfindungsgemäßen Waschvorrichtung beschrieben. Günstiger Weise ist das Gehäuse, zumindest teilweise, aus Metallblech gefertigt. Metall ist auch ein günstiger Werkstoff für die Herstellung des Leitungselementes 12. Das Rührelement 13 kann aus verschiedenen Werkstoffen hergestellt werden. Anforderungen an diese Werkstoffe sind jedoch stets eine gute Temperatur- und Feuchtigkeitsbeständigkeit.

Fig. 2 zeigt eine schematische, geschnittene Draufsicht einer Ausführungsform eines erfindungsgemäßen Kondensator/Wärmetauschers 1. In dieser Draufsicht ist eine Ausführungsform so dargestellt, dass das spiralförmige Leitungselement 12 direkt zu sehen ist. In der Ansicht wurde die obere Seite des Gehäuses 11 entfernt, so dass das im Gehäuse 11 befindliche Leitungselement 12 gut zu sehen ist. In der Mitte der Ansicht ist das Rührelement 13 zu sehen. Auch in dieser Ausführungsform weist das Rührelement 13 zwei Schaufelelemente 131 auf, die einander gegenüberliegend an der in der Rotationsachse R angeordneten Welle befestigt sind. Die gekrümmten Pfeile in der Darstellung symbolisieren die Drehrichtung des Rührelementes 13. Unterhalb des Rührelementes 13 ist der kreisrund ausgeführte Auslass 111 dargestellt, der sich in der nach unten gewandten Begrenzungswand des Gehäuses 11 befindet. Die Außenwand des Gehäuses 11 umschließt alle anderen Elemente in der Darstellung. In der dargestellten Draufsicht ist die Außenwand des Gehäuses 11 kreisförmig. Das Leitungselement 12 ist innerhalb der Außenwand des Gehäuses 11 angeordnet und hat hier einen quadratischen Querschnitt, wobei allerdings die Ecken des Quadrates eine Rundung bzw. einen Radius aufweisen. Die Unterschiede in der Form zwischen der Außenwand des Gehäuses 11, deren innere Seite die Innenwand des Gehäuses 11 bildet und der Form des Leitungselementes 12 in der Draufsicht sind besonders günstig für eine Umströmung des Leitungselementes 12 mit Abluft. Die Abluft strömt durch den hier nicht dargestellten Einlass 110, der oberhalb des dargestellten Auslasses 111 angeordnet ist, in Richtung in die Zeichnungsebene hinein in das Gehäuse 11. Durch das Rührelement 13 wird die Abluft horizontal, d. h. in der Zeichnungsebene nach außen verdrängt. Dabei strömt die Abluft durch die Abstände des spiralförmig ausgeführten Leitungselementes 12 und trifft anschließend auf die Innenwand des Gehäuses 11. Von der gewölbten Innenwand des Gehäuses 11 wird die Abluftströmung abgelenkt oder reflektiert und strömt zurück, wobei die Abluft erneut am Leitungselement 12 vorbeiströmt. Dadurch, dass das Leitungselement 12 in der Draufsicht eine quadratische Form, die Außenwand und die Innenwand des Gehäuses 11 jedoch eine runde Form aufweisen, variiert der Abstand zwischen Leitungselement 12 und Gehäuse 11. Dieser unterschiedliche Abstand in Umfangsrichtung des Gehäuses sorgt für eine turbulente Strömung, da die Abluft stets in anderer Art oder in einem anderen Winkel reflektiert wird und danach auf unterschiedliche Art oder in unterschiedlichem Winkel erneut am Leitungselement 12 vorbeiströmt. Wesentlich für eine gute Funktion des Kondensator/Wärmetauschers 1 ist somit, dass in der Draufsicht der Abstand zwischen dem Leitungselement 12 und der Innenwand des Gehäuses 11 nicht konstant, sondern in unterschiedlicher Größe ausgeführt ist. Dies lässt sich besonders gut durch eine unterschiedliche Form des Leitungs-elementes 12 zur Innenwand des Gehäuses 11 erreichen. In der Draufsicht in Fig. 2 ist gut zu erkennen, dass innerhalb des spiralförmigen Leitungselementes 12 eine große freie Fläche angeordnet ist. Somit besteht ein großes, freies Volumen innerhalb des Leitungselementes 12, durch das Abluft in Richtung in die Zeichnungsebene hinein strömen kann. Bei deaktivierten Rührelement 13 kann somit zumindest der größte Teil der Abluft am Leitungselement 12 vorbeiströmen, ohne dass eine um Strömung des Leitungs-elementes 12 erfolgt. Bei deaktivierten Rührelement 13 strömt die Abluft ohne Ablenkung parallel zur Zeichenebene einfach in Richtung in die Zeichnungsebene hinein durch das Gehäuse und verlässt es anschließend durch den Auslass 111.

Fig. 3 zeigt eine schematische, geschnittene Draufsicht einer alternativen Ausführungsform eines erfindungsgemäßen Kondensator/Wärmetauschers 1. Diese Ansicht entspricht der Ansicht in Fig. 2., für die dargestellten Bauteile oder Elemente gilt somit die Beschreibung zu Fig. 2, soweit nicht anders dargestellt. Die in Fig. 3 dargestellte alternative Ausführungsform eines Kondensator/Wärmetauschers 1 unterscheidet sich zu der Ausführungsform Fig. 2 dadurch, dass die Form des Leitungselementes 12 und der Außenwand und Innenwand des Gehäuses 11 unterschiedlich ausgeführt ist. In der alternativen Ausführungsformen Fig. 3 ist die Form des spiralförmigen Leitungselementes 12 in einer Draufsicht kreisrund, die Innenwand des Gehäuses 11 ist jedoch quadratisch ausgeführt. Auch in dieser alternativen Ausführungsform ist der Abstand zwischen dem Leitungselement 12 und der Innenwand des Gehäuses 11 in Umfangsrichtung des Gehäuses nicht konstant, sondern variiert. Auch durch diese Formgebung wird erreicht, dass bei betätigtem Rührelement 13 eine besonders gute turbulente Umströmung des Leitungs-elementes 12 durch die Abluft erfolgt. Die vom Rührelement 13 von innen nach außen verdrängte Abluft wird durch die quadratisch geformte Innenwand des Gehäuses 11 in verschiedene Richtungen reflektiert, wodurch sich im Inneren des Gehäuses 11 eine turbulente Strömung der Abluft ergibt, welche wiederum für einen besonders guten Wärmeaustausch zwischen Abluft und Leitungselement 12 sorgt. Auch in der alternativen Ausführungsform in Fig. 3 weist das Rührelement 13 zwei einander gegenüberliegend angeordnete Schaufelelemente 131 auf. In der Ausführungsform in Fig. 3 weisen die beiden Schaufelelemente 131 jedoch zwei unterschiedliche Bereiche auf. Die Schaufelelemente 131 sind flächig ausgeführt, weisen jedoch einen Knick in ihrer Fläche auf. Durch diese veränderte Schaufelgeometrie kann die durch das Rührelement 13 erzeugte Strömung variiert werden. Generell können die Schaufelelemente 131 unterschiedlichste Formen annehmen. Je nach Abmessungen der anderen Bauteile des Kondensator/Wärmetauschers 1 kann über die Geometrie und Fläche der Schaufelelemente 131 die Umströmung des Leitungselement des 12 variiert und optimiert werden.

Fig. 4 zeigt eine schematische, geschnittene Seitenansicht einer Ausführungsform einer erfindungsgemäßen Waschvorrichtung 100. Die Waschvorrichtung 100 ist vereinfacht dargestellt. Rechts unten in der Darstellung ist die Waschkabine 1001 zu sehen. In die Waschkabine 1001 kann Waschgut (nicht dargestellt) eingebracht werden, welches dann in der Waschkabine 1001 in einem oder mehreren Waschgängen gereinigt wird. Am linken Rand im Inneren der Waschkabine 1001 sind symbolisch mehrere Waschdüsen dargestellt, welche Waschflüssigkeit versprühen. An der Waschkabine 1001 ist weiterhin eine nicht dargestellte Tür vorgesehen, über welche Waschgut in die Waschkabine 1001 eingebracht und aus dieser entnommen werden kann. Am linken Rand der Waschkabine 1001 ist ein Tank 1005 angeordnet, in dem Waschflüssigkeit gespeichert werden kann. Mit dem Tank 1005 verbunden ist die links daneben angeordnete Pumpe 1004. Die Pumpe 1004 erzeugt den nötigen Druck, um Waschflüssigkeit in die Waschkabine 1001 einzusprühen. Links neben der Pumpe 1004 ist ein Boiler 1002 angeordnet. Dieser Boiler 1002 dient dazu, Waschflüssigkeit vor dem Einsprühen in die Waschkabine 1001 vorzuwärmen. Zur Überführung der im Boiler 1002 vorerwärmten Waschflüssigkeit in die Waschkabine 1001 ist die Verbindungsleitung 10021 vorgesehen. Der Boiler 1002 weist weiterhin einen Zulauf 10022 auf, über den Waschflüssigkeit dem Boiler 1002 zur Erwärmung zugeführt werden kann. Der Zulauf 10022 ist über die Zulaufleitung 10023 mit dem Ablauf 121 des links oben dargestellten Kondensator/Wärmetauschers 1 verbunden. Somit kann im Kondensator/Wärmetauscher 1 vorgewärmte Waschflüssigkeit oder vorgewärmtes Brauchwasser über die Zulaufleitung 10023 dem Boiler 1002 zugeführt werden. Durch eine solche Zuführung von vorgewärmter Waschflüssigkeit wird vom Boiler 1002 weniger Energie zur Erwärmung benötigt. Der Zulauf des Kondensator/Wärmetauschers 1 ist über die Zuführung 91 mit einem Kalt- oder Frischwasserzulauf 9 verbunden. Dieser Kalt- oder Frischwasserzulauf 9 kann beispielsweise durch einen üblichen Wasseranschluss der lokalen Wasserversorgung gebildet werden. Alternativ kann der Kalt- oder Frischwasserzulauf 9 aber auch kaltes, recyceltes Prozesswasser aus der dargestellten oder einer anderen Waschvorrichtung oder Ähnlichem bereitstellen. Die im Kondensator/Wärmetauscher 1 rückgewonnene Energie, welche zur Vorwärmung des Brauchwassers bzw. der Waschflüssigkeit für den Boiler eingesetzt wird, wird der Abluft aus der Waschkabine 1001 entzogen. Die Waschkabine 1001 weist zur Entnahme der Abluft eine links oben dargestellte Abluftöffnung 10011 auf. Diese Abluftöffnung 10011 ist hier als verschließbare Klappe dargestellt. Nach Beendigung eines Waschvorgangs wird die Abluftöffnung 10011 geöffnet, so dass Abluft aus der Waschkabine1 001 abgesaugt werden kann. Zur Absaugung der Abluft ist die Abluftabführung 1003 vorgesehen. Die Abluftabführung 1003 ist über die Abluftöffnung 10011 mit der Waschkabine 1001 verbindbar. Zur Bewegung und Absaugung der Abluft weist die Abluftabführung 1003 einen nur symbolisch dargestellten Ventilator 10031 auf. Dieser Ventilator 10031 erzeugt in der Abluftabführung 1003 einen Unterdruck, wodurch die Abluft aus der Waschkabine 1001 abgesaugt wird. Die Abluftabführung 1003 ist an ihrem Ausgang mit dem Einlass 110 des Kondensator/Wärmetauschers 1 verbunden. Der in Fig. 4. dargestellte Kondensator/Wärmetauscher 1 entspricht dem Kondensator/Wärmetauscher 1 aus Fig. 1. Zu den Einzelheiten des Kondensator/Wärmetauschers 1 sei somit auf die Darstellung und die Beschreibung zu Fig. 1 verwiesen. In Fig. 4 ist zusätzlich zu Fig. 1 die Steuerung 14 dargestellt. Die Steuerung 14 ist über Sensorleitungen mit dem Temperatureintrittssensor 141 und dem Leitungstemperatursensor 142 und empfängt von diesen Sensoren Eingangssignale. Die Steuerung 14 ist weiterhin über mehrere Aktorleitungen mit dem Antrieb 130 des Rührelementes 13 und mit Ventilen am Zulauf 120 und am Ablauf 121 des Leitungselementes 12 verbunden. Die Steuerung 14 regelt den Betrieb des Kondensator/Wärmetauschers 1 durch Ansteuerung der Aktoren (Ventile und Antrieb) basierend auf den Sensorsignalen. Die Steuerung 14 kann selbstverständlich über weitere Sensoreingänge und Aktorausgänge erweitert werden.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombi-nationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse er-reichen.

## Patentansprüche

1. Kondensator/Wärmetauscher (1) zum Anschluss an einen Abluftauslass einer Waschvorrichtung zum Reinigen von Waschgut, umfassend
▪ ein Gehäuse (11) mit einem Einlass (110) und einem Auslass (111) für die Abluft aus dem Abluftauslass der Waschvorrichtung,
▪ zumindest ein Leitungselement (12) mit einem Zulauf (120) und einem Ablauf (121) für zu erwärmendes Brauchwasser,
▪ zumindest ein Rührelement (13) mit einem Antrieb (130) und zumindest einem Schaufelelement (131), wobei das Schaufelelement (131) dazu vorgesehen ist, die Abluft aus der Waschvorrichtung im Gehäuse (11) zu bewegen,
▪ wobei das Leitungselement (12) spiralförmig um zumindest einen Teil des Rührelementes (13) herum angeordnet ist und das Gehäuse (11) das Rührelement (13) und das Leitungselement (12) umschließt,
▪ wobei der Einlass (110) und der Auslass (111) durch Durchbrüche im Gehäuse gebildet werden, welche innerhalb des spiralförmig ausgeführten Leitungselementes (12) münden und das Rührelement (13), insbesondere das Schaufelelement (131), so ausgeführt ist, dass die durch den Einlass (110) eintretende Abluft bei Betätigung des Rührelementes (13) durch das Leitungselement (12) hindurch oder am Leitungselement (12) vorbei zum umschließenden Gehäuse (11) hin verdrängbar ist, und
▪ wobei eine Steuerung (14) vorgesehen ist, die den Betrieb des Rührelementes (13) regelt, wobei zumindest ein Temperatureintrittssensor (141) vorgesehen ist, der die Temperatur der am Einlass (110) eintretenden Abluft bestimmt und wobei zumindest ein Leitungstemperatursensor (142) vorgesehen ist, der die Temperatur im Inneren des Leitungselementes (12) bestimmt und die Signale dieser Temperatursensoren der Steuerung (14) zugeführt werden und die Steuerung aus diesen Signalen die Regelung des Rührelementes (13) bestimmt.

2. Kondensator/Wärmetauscher (1) nach Anspruch 1, **dadurch gekennzeichnet, dass** das Leitungselement (12) durch ein Rohr gebildet wird, welches spiralförmig ausgeführt ist, wobei zwischen den einzelnen Windungen des spiralförmig ausgeführten Rohres Abstände bestehen, durch welche die vom Rührelement (13) verdrängte Abluft strömen kann.

3. Kondensator/Wärmetauscher (1) nach einem der vorhergehenden Ansprüche, **dadurch gekennzeichnet, dass** die Rotationsachse (R) des Rührelementes (13) im Betrieb des Kondensator/Wärmetauschers (1) im Wesentlichen vertikal verläuft.

4. Kondensator/Wärmetauscher (1) nach einem der vorhergehenden Ansprüche, **dadurch gekennzeichnet, dass** eine Mittelachse des Leitungselements (12) im Betrieb vertikal orientiert ist und der Zulauf (120) an einem im Betrieb nach unten orientierten Ende des Leitungselementes (12) und der Ablauf (121) an einem im Betrieb nach oben orientierten Ende des Leitungselementes (12) angeordnet ist.

5. Kondensator/Wärmetauscher (1) nach Anspruch 3 oder **4, dadurch gekennzeichnet, dass** das Leitungselement (12) in einer Draufsicht von oben auf den Kondensator/Wärmetauscher rechteckig, insbesondere quadratisch, und die Innenwand des Gehäuses (11) kreisrund oder oval ausgeführt ist oder das Leitungselement (12) in einer Draufsicht von oben auf den Kondensator/Wärmetauscher kreisrund oder oval und die Innenwand des Gehäuses (11) rechteckig ausgeführt ist.

6. Kondensator/Wärmetauscher (1) nach einem der vorhergehenden Ansprüche, **dadurch gekennzeichnet, dass** das Rührelement (13) in Umfangsrichtung um dessen Rotationsachse (R) herum mehrere, insbesondere verschieden geformte Schaufelelemente (131) aufweist.

7. Kondensator/Wärmetauscher (1) nach einem der vorhergehenden Ansprüche, **dadurch gekennzeichnet, dass** das Rührelement (13) in axialer Richtung entlang seiner Rotationsachse (R) mehrere Schaufelelemente (131) aufweist.

8. Kondensator/Wärmetauscher (1) nach einem der vorhergehenden Ansprüche, **dadurch gekennzeichnet, dass** das Rührelement (13) eine Rotationsachse (R) aufweist, an der das zumindest eine Schaufelelement (131) befestigt ist und zusätzlich das Rührelement (13) eine Hilfsachse aufweist, an der ein Wirbelelement zum Bewegen der Abluft befestigt ist, wobei die Rotationsachse (R) und die Hilfsachse gleichzeitig oder unabhängig voneinander rotiert werden können.

9. Kondensator/Wärmetauscher (1) nach einem der vorhergehenden Ansprüche, **dadurch gekennzeichnet, dass** die Rotationsachse (R) des Rührelementes (13) zwischen Einlass (110) und Auslass (111) des Gehäuses (11) verläuft.

10. Kondensator/Wärmetauscher (1) nach einem der vorhergehenden Ansprüche, **dadurch gekennzeichnet, dass** der Leitungstemperatursensor (142) am Leitungselement (12) in der Mitte zwischen Zulauf (120) und Ablauf (121) angeordnet ist.

11. Waschvorrichtung (100) zur Reinigung von Waschgut, umfassend
▪ eine Waschkabine (1001), in welcher das Waschgut gereinigt wird, wobei die Waschkabine (1001) eine Abluftöffnung (10011) aufweist,
▪ zumindest einen Boiler (1002), der dazu vorgesehen ist Waschflüssigkeit vorzuwärmen, wobei der Boiler (1002) über eine Verbindungsleitung (10021) mit der Waschkabine (1001) verbunden ist,
▪ zumindest eine Abluftabführung (1003), welche mit der Abluftöffnung (10011) der Waschkabine (1001) verbunden ist,
▪ zumindest einen Kondensator/Wärmetauscher (1) nach einem der vorhergehenden Ansprüche,
▪ wobei die Abluftabführung (1003) mit dem Einlass (110) des Kondensator/Wärmetauschers verbunden ist, wodurch Abluft aus der Waschkabine dem Kondensator/Wärmetauscher zu führbar ist, und
▪ wobei der Zulauf (120) des Kondensator/Wärmetauschers mit einem Kalt- oder Frischwasserzulauf (9) verbunden ist und der Ablauf (121) des Kondensator/Wärmetauschers mit einem Zulauf (10022) des Boilers (1002) verbunden ist, wodurch Wärme aus der Abluft aus der Waschkabine (1001) durch den Kondensator/Wärmetauscher zur Vorwärmung von dem Boiler (1002) zugeführten Waschwasser einsetzbar ist.

12. Waschvorrichtung (100) nach dem vorhergehenden Anspruch **dadurch gekennzeichnet, dass** die Abluftabführung (1003) zumindest einen Ventilator (10031) umfasst, der Abluft aus der Waschkabine (1001) absaugt und dem Kondensator/Wärmetauscher zuführt.

13. Verfahren zur Nutzung von Abwärme beim Betrieb einer Waschvorrichtung (100) zum Reinigen von Waschgut, durch einen Kondensator/Wärmetauscher (1) nach einem der vorhergehenden Ansprüche, umfassend die Schritte
▪ Absaugen von kondensathaltiger Abluft aus einer Waschvorrichtung (100),
▪ Vorbeileitung der Abluft an einem Leitungselement (12), wobei Wärme aus der Abluft auf den Inhalt des Leitungselementes (12) übergeht und sich Kondensat aus der Abluft an dem Leitungselement (12) niederschlägt, wobei die Abluft durch ein Rührelement (13) zum Leitungselement (12) bewegt wird und diese durch das Rührelement (12) erzeugte Bewegung zumindest teilweise rechtwinklig zur Anströmrichtung der Abluft aus der Waschvorrichtung (100) gerichtet ist,
▪ Ableitung des am Leitungselement (12) niedergeschlagenen Kondensats,
▪ Ableitung der abgekühlten, getrockneten Abluft,
▪ Ableitung des erwärmten Inhalts des Leitungselementes (12) zur Verwendung in der Waschvorrichtung (100),
▪ wobei eine Steuerung (14) den Betrieb des Rührelementes (13) regelt, wobei zumindest ein Temperatureintrittssensor (141) die Temperatur der am Einlass (110) eintretenden Abluft bestimmt und wobei zumindest ein Leitungstemperatursensor (142) die Temperatur im Inneren des Leitungselementes (12) bestimmt und die Signale dieser Temperatursensoren der Steuerung (14) zugeführt werden und die Steuerung aus diesen Signalen die Regelung des Rührelementes (13) bestimmt.

14. Verfahren nach dem vorhergehenden Anspruch, **dadurch gekennzeichnet, dass** die Temperatur der abgesaugten Abluft und die Temperatur des Inhaltes das Leitungselementes (12) bestimmt wird und die Bewegung der Abluft durch das Rührelement (13) und damit die Vorbeileitung der Abluft am Leitungselement (12) solange vorgenommen wird, wie die Temperatur der Abluft höher ist als die Temperatur des Inhaltes des Leitungselementes (12) ist und sobald die Temperatur der Abluft niedriger als die Temperatur des Inhaltes des Leitungselementes (12) ist, die Bewegung der Abluft durch das Rührelement (13) beendet wird, so dass die Abluft im Wesentlichen parallel zu ihrer Anströmrichtung fließt und nicht am Leitungselement (12) vorbeigeleitet wird.

## Claims

1. Condenser/heat exchanger (1) for connection to an exhaust air outlet of a washing device for cleaning washing goods, comprising
▪ a housing (11) with an inlet (110) and an outlet (111) for the exhaust air from the exhaust air outlet of the washing device,
▪ at least one pipe element (12) with an inlet (120) and an outlet (121) for domestic water to be heated,
▪ at least one stirring element (13) with a drive (130) and at least one blade element (131), wherein the blade element (131) is provided to move the exhaust air from the washing device in the housing (11),
▪ wherein the conduit member (12) is spirally arranged around at least a part of the stirring member (13) and the housing (11) encloses the stirring member (13) and the conduit member (12),
▪ wherein the inlet (110) and the outlet (111) are formed by openings in the housing, which open out inside the spirally designed conduit element (12), and the stirring element (13), in particular the blade element (131), is designed in such a way that the exhaust air entering through the inlet (110) can be displaced through the conduit element (12) or past the conduit element (12) towards the enclosing housing (11) when the stirring element (13) is actuated, and
▪ wherein a control (14) is provided which regulates the operation of the stirring element (13), wherein at least one temperature inlet sensor (141) is provided which determines the temperature of the exhaust air entering at the inlet (110) and wherein at least one conduction temperature sensor (142) is provided which determines the temperature in the interior of the conduction element (12) and the signals of these temperature sensors are fed to the control (14) and the control determines the regulation of the stirring element (13) from these signals.

2. Condenser/heat exchanger (1) according to claim 1, **characterised in that** the conduit element (12) is formed by a tube which is designed in a spiral shape, there being spaces between the individual turns of the spiral-shaped tube through which the exhaust air displaced by the stirring element (13) can flow.

3. Condenser/heat exchanger (1) according to one of the preceding claims, **characterised in that** the axis of rotation (R) of the stirring element (13) is substantially vertical during operation of the condenser/heat exchanger (1).

4. Condenser/heat exchanger (1) according to one of the preceding claims, **characterised in that** a central axis of the conduit element (12) is oriented vertically during operation and the inlet (120) is arranged at an end of the conduit element (12) oriented downwards during operation and the outlet (121) is arranged at an end of the conduit element (12) oriented upwards during operation.

5. Condenser/heat exchanger (1) according to claim 3 or 4, **characterised in that** the line element (12) is rectangular, in particular square, in a top view of the condenser/heat exchanger and the inner wall of the housing (11) is circular or oval, or the line element (12) is circular or oval in a top view of the condenser/heat exchanger and the inner wall of the housing (11) is rectangular.

6. Condenser/heat exchanger (1) according to one of the preceding claims, **characterised in that** the stirring element (13) has a plurality of, in particular differently shaped, blade elements (131) in the circumferential direction around its axis of rotation (R).

7. Condenser/heat exchanger (1) according to one of the preceding claims, **characterised in that** the stirring element (13) has a plurality of blade elements (131) in the axial direction along its axis of rotation (R).

8. A condenser/heat exchanger (1) according to any one of the preceding claims, **characterised in that** the agitator element (13) has an axis of rotation (R) to which the at least one blade element (131) is attached and in addition the agitator element (13) has an auxiliary axis to which a vortex element for moving the exhaust air is attached, wherein the axis of rotation (R) and the auxiliary axis can be rotated simultaneously or independently of each other.

9. Condenser/heat exchanger (1) according to one of the preceding claims, **characterised in that** the axis of rotation (R) of the stirring element (13) runs between the inlet (110) and outlet (111) of the housing (11).

10. Condenser/heat exchanger (1) according to one of the preceding claims, **characterised in that** the line temperature sensor (142) is arranged on the line element (12) midway between the inlet (120) and outlet (121).

11. washing device (100) for cleaning washing material, comprising
▪ a washing cubicle (1001) in which the material to be washed is cleaned, the washing cubicle (1001) having an exhaust air opening (10011),
▪ at least one boiler (1002) intended to preheat washing liquid, the boiler (1002) being connected to the washing cabin (1001) via a connection pipe (10021),
▪ at least one exhaust air outlet (1003) which is connected to the exhaust airopening (10011) of the washing cubicle (1001),
▪ at least one condenser/heat exchanger (1) according to one of the preceding claims,
▪ wherein the exhaust outlet (1003) is connected to the inlet (110) of the condenser/heat exchanger, whereby exhaust air from the wash booth can be directed to the condenser/heat exchanger, and
▪ wherein the inlet (120) of the condenser/heat exchanger is connected to a cold or fresh water inlet (9) and the outlet (121) of the condenser/heat exchanger is connected to an inlet (10022) of the boiler (1002), whereby heat from the exhaust air from the wash cubicle (1001) can be used by the condenser/heat exchanger to preheat wash water supplied to the boiler (1002).

12. Washing device (100) according to the preceding claim, **characterised in that** the exhaust air discharge (1003) comprises at least one fan (10031) which extracts exhaust air from the washing cabin (1001) and supplies it to the condenser/heat exchanger.

13. method of utilising waste heat in the operation of a washing device (100) for cleaning items to be washed, by means of a condenser/heat exchanger (1) according to one of the preceding claims, comprising the steps of
▪ Extraction of exhaust air containing condensate from a washing device (100),
▪ Conducting the exhaust air past a conduit element (12), wherein heat from the exhaust airis transferred to the contents of the conduit element (12) and condensate from the exhaust air is deposited on the conduit element (12), wherein the exhaust air is moved to the conduit element (12) by a stirring element (13) and this movement generated by the stirring element (12) is directed at least partially at right angles to the direction of inflow of the exhaust air from the washing device (100),
▪ Discharge of the condensate deposited on the line element (12),
▪ Discharge of the cooled, dried exhaust air,
▪ Discharge of the heated contents of the conduit element (12) for use in the washing device (100),
▪ wherein a controller (14) regulates the operation of the stirring element (13), wherein at least one temperature inlet sensor (141) determines the temperature of the exhaust air entering at the inlet (110) and wherein at least one conduction temperature sensor (142) determines the temperature in the interior of the conduction element (12) and the signals of these temperature sensors are fed to the controller (14) and the controller determines the regulation of the stirring element (13) from these signals.

14. Method according to the preceding claim, **characterised in that** the temperature of the extracted exhaust air and the temperature of the contents of the conduit element (12) is determined and the movement of the exhaust air through the stirring element (13) and thus the passing of the exhaust air past the conduit element (12) is carried out for as long as the temperature of the exhaust air is higher than the temperature of the contents of the conduit element (12) and as soon as the temperature of the exhaust air is lower than the temperature of the contents of the conduit element (12), the movement of the exhaust air is carried out, as long as the temperature of the exhaust air is higher than the temperature of the contents of the conduit element (12) and as soon as the temperature of the exhaust air is lower than the temperature of the contents of the conduit element (12), the movement of the exhaust air through the stirring element (13) is terminated, so that the exhaust air flows substantially parallel to its flow direction and is not guided past the conduit element (12).

## Revendications

1. Condenseur/échangeur de chaleur (1) destiné à être raccordé à une sortie d'air d'évacuation d'un dispositif de lavage pour le nettoyage de produits de lavage, comprenant
▪ un boîtier (11) avec une entrée (110) et une sortie (111) pour l'air d'échappement provenant de la sortie d'air d'échappement du dispositif de lavage,
▪ au moins un élément de tuyau (12) avec une entrée (120) et une sortie (121) pour l'eau de service à chauffer,
▪ au moins un élément d'agitation (13) avec un entraînement (130) et au moins un élément à palette (131), l'élément à palette (131) étant prévu pour déplacer l'air d'échappement du dispositif de lavage dans le boîtier (11),
▪ dans lequel l'élément de conduit (12) est disposé en spirale autour d'au moins une partie de l'élément d'agitation (13) et le boîtier (11) renferme l'élément d'agitation (13) et l'élément de conduit (12),
▪ dans lequel l'entrée (110) et la sortie (111) sont formées par des ouvertures dans le boîtier, qui débouchent à l'intérieur de l'élément de conduite (12) conçu en forme de spirale, et l'élément d'agitation (13), en particulier l'élément à palette (131), est conçu de telle sorte que l'air d'échappement entrant par l'entrée (110) peut être déplacé à travers l'élément de conduite (12) ou au-delà de l'élément de conduite (12) vers le boîtier (11) qui l'entoure lorsque l'élément d'agitation (13) est actionné, et
▪ dans lequel il est prévu une commande (14) qui régule le fonctionnement de l'élément d'agitation (13), dans lequel il est prévu au moins un capteur de température d'entrée (141) qui détermine la température de l'air d'échappement entrant à l'entrée (110) et dans lequel il est prévu au moins un capteur de température de conduction (142) qui détermine la température à l'intérieur de l'élément de conduction (12) et les signaux de ces capteurs de température sont amenés à la commande (14) et la commande détermine la régulation de l'élément d'agitation (13) à partir de ces signaux.

2. Condenseur/échangeur de chaleur (1) selon la revendication 1, **caractérisé en ce que** l'élément de conduite (12) est formé par un tube en forme de spirale, des espaces étant prévus entre les différentes spires du tube en forme de spirale, à travers lesquels l'air d'échappement déplacé par l'élément de brassage (13) peut s'écouler.

3. Condenseur/échangeur de chaleur (1) selon l'une quelconque des revendications précédentes, **caractérisé en ce que** l'axe de rotation (R) de l'élément de brassage (13) est sensiblement vertical pendant le fonctionnement du condenseur/échangeur de chaleur (1).

4. Condenseur/échangeur de chaleur (1) selon l'une des revendications précédentes, **caractérisé en ce qu'**un axe central de l'élément de conduit (12) est orienté verticalement en fonctionnement et l'entrée (120) est disposée à une extrémité de l'élément de conduit (12) orientée vers le bas en fonctionnement et la sortie (121) est disposée à une extrémité de l'élément de conduit (12) orientée vers le haut en fonctionnement.

5. Condenseur/échangeur de chaleur (1) selon la revendication 3 ou 4, **caractérisé en ce que** l'élément de conduite (12) est rectangulaire, en particulier carré, dans une vue de dessus du condenseur/échangeur de chaleur et la paroi intérieure du logement (11) est circulaire ou ovale, ou l'élément de conduite (12) est circulaire ou ovale dans une vue de dessus du condenseur/échangeur de chaleur et la paroi intérieure du logement (11) est rectangulaire.

6. Condenseur/échangeur de chaleur (1) selon l'une des revendications précédentes, **caractérisé en ce que** l'élément d'agitation (13) présente, dans la direction circonférentielle autour de son axe de rotation (R), une pluralité d'éléments de lame (131), en particulier de forme différente.

7. Condenseur/échangeur de chaleur (1) selon l'une quelconque des revendications précédentes, **caractérisé en ce que** l'élément de brassage (13) comprend une pluralité d'éléments en forme de lame (131) dans la direction axiale le long de son axe de rotation (R).

8. Condenseur/échangeur de chaleur (1) selon l'une quelconque des revendications précédentes, **caractérisé en ce que** l'élément d'agitation (13) comprend un axe de rotation (R) sur lequel est fixé le au moins un élément de pale (131) et, en outre, l'élément d'agitation (13) comprend un axe auxiliaire sur lequel est fixé un élément de tourbillon pour déplacer l'air d'échappement, dans lequel l'axe de rotation (R) et l'axe auxiliaire peuvent être tournés simultanément ou indépendamment.

9. Condenseur/échangeur de chaleur (1) selon l'une quelconque des revendications précédentes, **caractérisé en ce que** l'axe de rotation (R) de l'élément de brassage (13) s'étend entre l'entrée (110) et la sortie (111) du boîtier (11).

10. Condenseur/échangeur de chaleur (1) selon l'une des revendications précédentes, **caractérisé en ce que** le capteur de température de ligne (142) est disposé sur l'élément de ligne (12) à mi-chemin entre l'entrée (120) et la sortie (121).

11. dispositif de lavage (100) pour le nettoyage du matériel de lavage, comprenant
▪ une cabine de lavage (1001) dans laquelle le matériau à laver est nettoyé, la cabine de lavage (1001) ayant une ouverture d'évacuation d'air (10011),
▪ au moins une chaudière (1002) destinée à préchauffer le liquide de lavage, la chaudière (1002) étant reliée à la cabine de lavage (1001) par un tuyau de liaison (10021),
▪ au moins une sortie d'air d'échappement (1003) qui est reliée à l'ouverture d'air d'échappement (10011) de la cabine de lavage (1001),
▪ Au moins un condenseur/échangeur de chaleur (1) selon l'une quelconque des revendications précédentes.
▪ dans lequel la sortie d'échappement (1003) est connectée à l'entrée (110) du condenseur/échangeur de chaleur, de sorte que l'air d'échappement de la cabine de lavage peut être dirigé vers le condenseur/échangeur de chaleur, et
▪ dans lequel l'entrée (120) du condenseur/échangeur de chaleur est connectée à une entrée d'eau froide ou fraîche (9) et la sortie (121) du condenseur/échangeurde chaleur est connectée à une entrée (10022) de la chaudière (1002), moyennant quoi la chaleurde l'air d'échappement de la cabine de lavage (1001) peut être utilisée par le condenseur/échangeur de chaleur pour préchauffer l'eau de lavage fournie à la chaudière (1002).

12. Dispositif de lavage (100) selon la revendication précédente, **caractérisé en ce que** l'évacuation d'air vicié (1003) comprend au moins un ventilateur (10031) qui extrait l'air vicié de la cabine de lavage (1001) et l'amène au condenseur/échangeur de chaleur.

13. Procédé d'utilisation de la chaleur perdue dans le fonctionnement d'un appareil de lavage (100) pour nettoyer des articles de lavage, par un condenseur/échangeur de chaleur (1) selon l'une quelconque des revendications précédentes, comprenant les étapes suivantes
▪ Extraction de l'air d'échappement contenant le condensat d'un dispositif de lavage (100),
▪ Conduite de l'air d'échappement devant un élément de conduite (12), la chaleur de l'air d'échappement étant transférée au contenu de l'élément de conduite (12) et le condensat de l'air d'échappement étant déposé sur l'élément de conduite (12), l'air d'échappement étant déplacé vers l'élément de conduite (12) par un élément d'agitation (13), et ce mouvement généré par l'élément d'agitation (12) étant dirigé au moins partiellement à angle droit par rapport à la direction d'entrée de l'air d'échappement du dispositif de lavage (100),
▪ Décharge du condensat déposé sur l'élément de ligne (12),
▪ Refoulement de l'air d'échappement refroidi et séché,
▪ Décharger le contenu chauffé de l'élément de conduit (12) pour l'utiliser dans le dispositif de lavage (100),
▪ dans lequel un contrôleur (14) régule le fonctionnement de l'élément d'agitation (13), dans lequel au moins un capteur de température d'entrée (141) détermine la température de l'air d'échappement entrant à l'entrée (110) et dans lequel au moins un capteur de température de conduction (142) détermine la température à l'intérieur de l'élément de conduction (12) et les signaux de ces capteurs de température sont amenés au contrôleur (14) et le contrôleur détermine la régulation de l'élément d'agitation (13) à partir de ces signaux.

14. Procédé selon la revendication précédente, **caractérisé en ce que** la température de l'air d'échappement extrait et la température du contenu de l'élément de conduite (12) sont déterminées et le mouvement de l'air d'échappement à travers l'élément d'agitation (13) et donc la conduction de l'air d'échappement à travers l'élément de conduite (12) est effectué aussi longtemps que la température de l'air d'échappement extrait et la température du contenu de l'élément de conduite (12) sont déterminées. tant que la température de l'air d'échappement est supérieure à la température du contenu de l'élément de conduit (12) et dès que la température de l'air d'échappement est inférieure à la température du contenu de l'élément de conduit (12), le mouvement de l'air d'échappement à travers l'élément d'agitation (13) est terminé de sorte que l'air d'échappement s'écoule sensiblement parallèlement à sa direction d'écoulement et n'est pas guidé au-delà de l'élément de conduit (12).
